# EUROPÄISCHE PATENTSCHRIFT

(11) **EP 0 799 386 B1**
(45) Veröffentlichungstag und Bekanntmachung des Hinweises auf die Patenterteilung: **14.03.2001**
(21) Anmeldenummer: 95941719.7
(22) Anmeldetag: 18.12.1995
(51) Int. Cl.: F16B 25/10, F16B 35/04

(54) **LOCH- UND GEWINDEFORMENDE SCHRAUBE SOWIE VERFAHREN ZUM EINDREHEN DERSELBEN**
HOLE-SHAPING AND THREAD-FORMING SCREW AND PROCESS FOR DRIVING IN THE SAME
VIS FOREUSE ET TARAUDEUSE ET SON PROCEDE D'ENFONCEMENT

(30) Priorität: 21.12.1994 DE 4445806
(43) Veröffentlichungstag der Anmeldung: 08.10.1997
(73) Patentinhaber: SFS Industrie Holding AG, 9435 Heerbrugg (CH)
(72) Erfinder: PALM, Erich, CH-9434 Au (CH)
(74) Vertreter: Ludescher, Hans
(86) Internationale Anmeldenummer: EP9504994
(87) Internationale Veröffentlichungsnummer: WO9619675

(56) Entgegenhaltungen:
- WO-A-94/25764
- DE-A- 2 800 620
- DE-C- 54 903
- FR-A- 1 008 781
- US-A- 3 156 152
- US-A- 3 648 560
- US-A- 3 682 038

## Beschreibung

Die Erfindung betrifft eine loch- und gewindeformende Schraube mit einem zu einer Spitze oder zu einer spitzenähnlichen Form auslaufenden, spanlos lochformenden Endabschnitt, einem mit einem Gewinde versehenen Schaftabschnitt und einem Angriffsabschnitt zum An- oder Einsetzen eines Werkzeuges, sowie ein Verfahren zum Eindrehen einer loch- und gewindeformenden Schraube.

Es ist bereits eine Schraube bekannt geworden (US-PS 2 015 159), bei welcher die am freien Ende angeordnete Spitze mittels Schlag mit einem Hammer durch ein dünnes Blech hindurchgeschlagen und somit ein Loch geformt wird. Durch nachträgliches Drehen der Schraube wird das Gewinde eingeformt, und der Befestiger hat dadurch den entsprechenden Halt.

Auch ist eine Ausführung einer loch- und gewindeformenden Schraube bekannt geworden (EP-B-0 464 071), welche an ihrem freien Ende einen sich verjüngenden Lochformteil aufweist, der einem Kegel ähnlich ausgebildet ist. Die Spitze dieses Lochformteils ist inetwa halbkugelförmig ausgebildet und stellt so eine ballige Reibfläche dar, welche bei entsprechender Rotation der Schraube das zu durchdringende Blech erweicht und somit ein Durchdringen ermöglicht.

Bekannt geworden ist auch bereits eine Ausführung, welche mehrere winkelmäßig gegeneinander abgesetzte kegelige bzw. kegelstumpfförmige Abschnitte aufweist (US-A 3 156 152), wobei auch diese Ausführung einer Schraube vorerst mit dem Hammer durch die Bleche hindurchgeschlagen wird, worauf dann der Eindrehvorgang unter Bildung des Gewindes erfolgt.

Es gibt natürlich eine Reihe von bekannten Ausführungen, welche konkret Schneiden aufweisen, um eine Art Bohrvorgang zur Herstellung eines Loches ausüben zu können.

Offensichtlich ist also immer davon ausgegangen worden, daß entweder Bohrschneiden vorhanden sein müssen oder aber, daß durch bestimmte Formgebung und Drehzahl der Umgebungsbereich der Schraube durch Reibungswärme so stark erhitzt werden muß, daß eine Materialerweichung stattfindet.

Es ist auch schon vorgeschlagen worden (US 3,648,560 A), am freien Ende eines Schraubenschaftes eine kegelstumpfartige Spitze und einen einseitig abgeflachten Bereich vorzusehen. Eine derartige Schraube wird in ein im Durchmesser kleiner vorgebohrtes Loch eingesetzt, welches durch die Schraube aufweitet werden soll. Dabei sorgt eine Art Gewindenut in der kegelstumpfartigen Spitze dafür, daß der Schaft beim Drehvorgang schraubenartig in die kleine Bohrung hineingezogen wird. Dadurch erfolgt ein Aufweiten der Bohrung durch eine Axialkraft und einen schnellen, auf die Steigung der Gewindenut angepaßten Vorschub.

Die vorliegende Erfindung hat sich zur Aufgabe gestellt, eine Schraube zu schaffen, mit welcher in einfacher Weise beim Eindrehen derselben spanlos ein Loch geformt werden kann. Weiters ist es Aufgabe der Erfindung, durch Einsatz eines besonderen Eindrehverfahrens die Lochformung zusätzlich zu verkürzen.

Erfindungsgemäß wird nun vorgeschlagen, daß der spanlos lochformende, spitzwinklig zur Schraubenachse zum Ende hin sich kegelförmig oder kegelstumpfförmig verjüngende Endabschnitt der Schraube zumindest eine annähernd achsparallel verlaufende, eine Querschnittsverringerung über wenigstens einen Teilbereich der Länge des Endabschnittes bewirkende Abflachung, Einbuchtung oder Wölbung aufweist, so daß der Außenumfang des verbleibenden Querschnitts sich über einen Winkelbereich von mehr als 180° erstreckt, und daß die Abflachung, Einbuchtung oder Wölbung mit Abstand vom freien Ende des Endabschnittes beginnt und sich zumindest über einen Großteil der Länge des restlichen Teilabschnittes des sich zum Schaft hin erweiternden Endabschnittes erstreckt.

Diese konstruktiven Maßnahmen bewirken, daß das Formen eines Loches durch den Endabschnitt der Schraube wesentlich verbessert und in einer kürzeren Zeit durchgeführt werden kann. Das Loch wird in einem sich stetig erweiternden Durchmesser hergestellt, wobei dieser Durchmesser dem jeweiligen Durchmesser des zum Ende hin sich konisch verjüngenden Endabschnittes entspricht. Der Querschnitt des jeweiligen Bereiches des Endabschnittes ist jedoch wesentlich geringer, so daß eine radiale Ausformwirkung abhängig von der Drehkraft des eingesetzten Werkzeuges ausgeübt wird. Es ist also durch den Anpreßdruck des Werkzeuges nicht nur die axiale Eindringung gegeben, sondern die Aufweitung des Loches wird durch die radiale Ausformung noch wesentlich verstärkt und beschleunigt. Beim Formen des Loches sind nicht nur Axialkräfte, sondern auch Radialkräfte wirksam, so daß die Zeit zur Herstellung des Loches wesentlich verkürzt wird.

Dabei ist zu bedenken, daß diese hervorragende Wirkung durch einfache konstruktive Maßnahmen erzielt wird, nämlich indem einfach eine Querschnittsverringerung des Endabschnittes erfolgt, ohne daß dadurch der für die Eindringung des Endabschnittes benötigte Durchmesser verringert würde. Deshalb ist es als ganz wesentliche Maßnahme anzusehen, daß der Außenumfang des neben der Abflachung, Einbuchtung oder Wölbung verbleibenden Querschnitts über einen Winkelbereich von mehr als 180° geführt ist. Zum Drehen der Schraube bedarf es auch während des Formens des Loches einer entsprechenden Lochgröße, wobei die Randbereiche der Abflachung oder dergleichen die radiale Ausformung zusätzlich unterstützen.

Als wesentlich zu betrachten ist aber auch, daß dadurch keine Bohrschneiden gebildet werden, sondern daß es immer nur zu einer spanlosen Verformung kommt.

Die Querschnittsverringerung ist über den Großteil der Länge des Endabschnittes vorgesehen, wobei jedoch zur exakten Zentrierung beim Ansetzen der Schraube die Abflachung noch nicht vorhanden ist. Der Abstand des Beginns der Abflachung ergibt sich aber auch aus der besonderen Anordnung der Abflachung oder dergleichen, da ja ein Winkelbereich für die Abflachung von weniger als 180° vorgesehen ist. Dadurch ergibt sich auch, daß der Außenumfang des verbleibenden Querschnitts sich über einen Winkelbereich von mehr als 180° erstreckt.

Ferner wird vorgeschlagen, daß sich die Abflachung, Einbuchtung oder Wölbung über den Endabschnitt hinaus bis in einen zylindrischen oder prismaförmigen, vorzugsweise gewindefreien Schaftabschnitt erstreckt. Dadurch ist es möglich, daß die Abflachung unmittelbar aufhört, da dann bereits ein entsprechender Durchmesser des Loches, in welchen der zylindrische bzw. prismaförmige Schaftabschnitt problemlos eindringen kann, bereits ausgeformt ist.

Von der Fertigung her gesehen ist es die einfachste Konstruktion, wenn die Abflachung eine ebene Fläche ist. In diesem Fall ist es möglich, die Abflachung bei der Schraubenherstellung durch einen Preßvorgang, durch ein Anzwicken oder durch einen zusätzlichen Arbeitsgang anzubringen.

Gerade bei einem Preßvorgang sind natürlich auch andere Konstruktionsmöglichkeiten gegeben. Es wäre z.B. denkbar, daß die Abflachung von zwei oder mehr als zwei annähernd achsparallel zur Schraubenachse ausgerichteten, in einem stumpfen Winkel aneinander anschliessenden Teilflächen gebildet ist.

Zudem sind bei einer solchen Schraube viele Möglichkeiten der Materialwahl gegeben. So kann die Schraube aus einem Kohlenstoffstahl gefertigt oder aber durchgehend aus einem rostfreien Material hergestellt sein. Als rostfreies Material kann ein rostfreier Stahl eingesetzt werden. Ferner ist es möglich, daß als rostfreies Material Leichtmetalle oder Legierungen aus Leichtmetallen bzw. Legierungen mit einem Hauptanteil an Leichtmetallen, z.B. Messing, Kupfer, Aluminium oder dergleichen, eingesetzt sind.

Die erfindungsgemäßen Maßnahmen können an verschiedenartig ausgebildeten Endabschnitten angewendet werden. Eine Möglichkeit sieht vor, daß der spanlos lochformende Endabschnitt aus zwei oder mehr als zwei Teilabschnitten mit unterschiedlichem Winkel zur Schraubenachse gebildet ist.

Wenn zu den konstruktiven Merkmalen zusätzlich ein entsprechendes Verfahren gemäß der vorliegenden Erfindung eingesetzt wird, ergeben sich gerade im Hinblick auf die Zeitspanne zum loch- und gewindeformenden Eindrehen einer Schraube weitere vorteilhafte Wirkungen. Das erfindungsgemäß vorgeschlagene Verfahren sieht vor, daß beim spanlos lochformenden Drehen der Schraube zusätzlich zum Drehantrieb eine axiale Schlageinwirkung auf die Schraube ausgeübt wird. Durch dieses spezielle Eindrehverfahren wird die Formung des Loches wesentlich beschleunigt, und es hat sich gezeigt, daß gerade beim Einsatz eines solchen Verfahrens problemlos noch weit dickere Werkstücke durch spanlose Verformung mit einem Loch versehen werden können.

Vorteilhaft ist, wenn anschließend an den Aufweitvorgang, also anschließend an die Formung des Loches, gemäß einem zusätzlichen Vorschlag des Verfahrens vorgesehen wird, daß die Schlageinwirkung auf die Schraube nur beim Lochformvorgang einwirkt und beim Drehvorgang beim Gewindeformen und beim Eindrehen der Schraube in das Gewinde ausgeschaltet wird. Dadurch ergibt sich im selbstgeformten Gewinde ein entsprechender Festsitz der Schraube. Die Schraube wird bei der Formung des Gewindes nur noch mit einem entsprechenden Drehmoment eingetrieben, so daß sich kein Lockern oder Vergrößern im Gewindebereich ergeben kann, was bei einem ständigen Schlagen in axialer Richtung durchaus möglich ist.

Weitere erfindungsgemäße Merkmale und besondere Vorteile werden in der nachstehenden Beschreibung anhand der Zeichnung noch näher erläutert. Es zeigen:
- Fig. 1: eine Ansicht einer Schraube, welche bereits zum Durchdringen auf ein Werkstück aufgesetzt ist;
- Fig. 2: einen Schnitt (vergrößert dargestellt) durch das Werkstück und die Schraube nach dem Eingreifen des Gewindes in die geformte Lochwandung;
- Fig. 3: eine Seitenansicht des Endabschnittes gemäß Fig. 1 vergrößert dargestellt;
- Fig. 4: einen Schnitt nach der Linie I-I in Fig. 1, ebenfalls vergrößert dargestellt;
- Fig. 5: einen gleichen Schnitt durch die Schraube wie in Fig. 4, wobei jedoch die vorgesehene Abflachung konstruktiv anders ausgebildet ist;
- Fig. 6: eine gleiche Ansicht eines Details wie in Fig. 3, wobei jedoch der Endabschnitt aus zwei aufeinander folgenden, winkelmäßig verschiedenen Teilabschnitten gebildet ist.

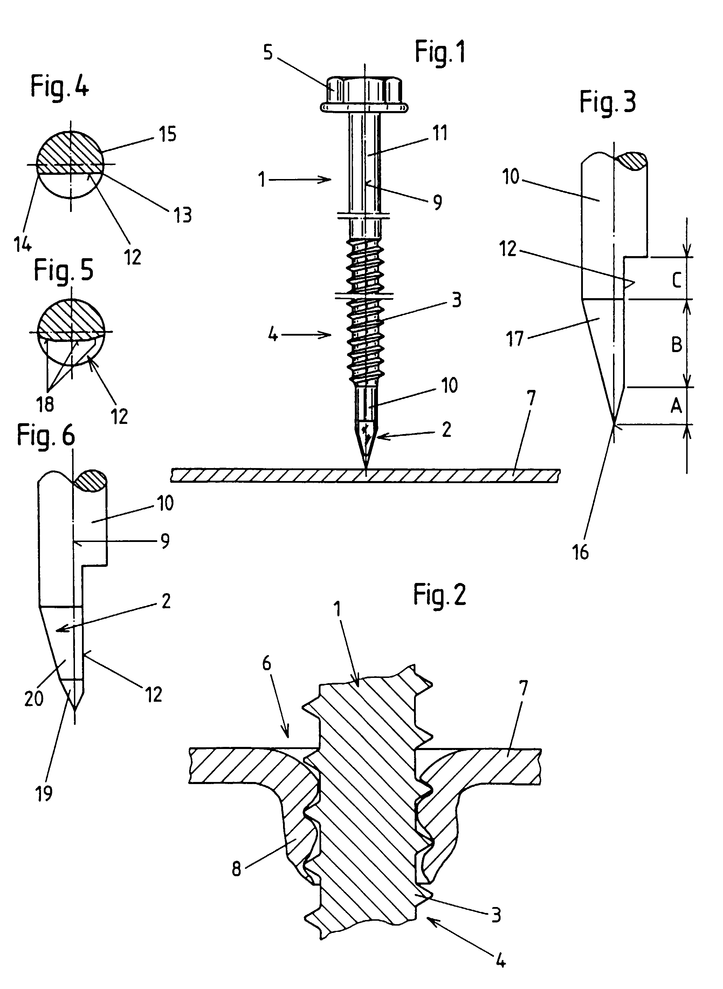

Die loch- und gewindeformende Schraube 1 ist mit einem zu einer Spitze oder zu einer spitzenähnlichen Form auslaufenden, spanlos lochformenden Endabschnitt 2 versehen. Ferner sind ein mit einem Gewinde 3 versehener Schaftabschnitt 4 und ein Angriffsabschnitt 5 zum An- oder Einsetzen eines Werkzeuges vorhanden. Der Endabschnitt 2 verjüngt sich zum Ende hin und weist eine Querschnittsverringerung über wenigstens einen Teilbereich der Länge des Endabschnittes 2 auf, wobei diese Querschnittsverringerung durch eine Abflachung 12 bewirkt wird. Da sich die Abflachung 12 im Querschnitt gesehen über einen Winkelbereich von weniger als 180° erstreckt, was den Fig. 3 und 4 eindeutig zu entnehmen ist, können die Übergangskanten 13 und 14 zwischen der Abflachung 12 und der übrigen Wandung 15 des Endabschnittes 2 keine Schneiden im eigentlichen Sinne bilden, da hier Schneiden mit einem stumpfen Winkel vorgesehen wären. Da außerdem beim Einformen des Loches 6 in das Werkstück 7 praktisch immer das Loch in einem Durchmesser vorhanden sein muß, der dem jeweiligen Durchmesser des betreffenden Abschnittes des Endabschnittes 2 entspricht, kann es auch nie zu einer Schneidwirkung der Kanten 13 und 14 kommen. Die durch die Abflachung 12 gegebene Querschnittsverringerung bewirkt jedoch, daß beim Durchdringen in axialer Richtung eine Erleichterung gegeben ist, in Drehrichtung jedoch größere Kräfte aufgewendet werden müssen, da ja immer ein Ausformen auf den gesamten Querschnitt des Endabschnittes 2 notwendig ist. Daher bedarf es keines so großen axialen Druckes, da ein Teil der Ausformkräfte für die Formung des Loches durch das Drehmoment aufgebracht wird. Anstelle der Abflachung 12 wäre es auch denkbar, eine entsprechende Einbuchtung oder eine entsprechende Wölbung vorzusehen, wobei die Einbuchtung oder Wölbung natürlich auch eine Querschnittsverringerung des Endabschnittes 2 in den betreffenden Bereichen mit sich bringen muß. Im Rahmen der Erfindung wäre es aber auch denkbar, am Umfangsbereich des Endabschnittes 2 mehr als eine Abflachung, Einbuchtung oder Wölbung vorzusehen, der Gesamtwinkelbereich aller Abflachungen, Einbuchtungen oder Wölbungen in Summe jedoch kleiner als 180° sein muß. Es soll ja verhindert werden, daß ein Bohrvorgang unter Bildung von Spänen stattfindet.

Die Abflachung 12 beginnt mit Abstand A vom freien Ende 16 des Endabschnittes 2 und erstreckt sich zumindest über einen Großteil der Länge B des restlichen Teilabschnittes 17 des sich zum Schaft 4 hin erweiternden Endabschnittes 2.

Vorteilhaft ist zwischen dem sich konisch verjüngenden Endabschnitt 2 und dem mit dem Gewinde 3 versehenen Schaftabschnitt 4 ein Schaftabschnitt 10 vorgesehen, der in der Regel zylindrisch ausgeführt ist, jedoch auch prismaförmig, also im Querschnitt mehreckförmig gestaltet werden kann. Bei einer solchen Ausgestaltung ist es möglich, die Abflachung 12 über den Endabschnitt 2 hinausgehend bis in den Schaftabschnitt 10 zu führen, so daß also die Länge der Abflachung 12 um das Maß C vergrößert wird.

Die einfachste Konstruktion ist dann gegeben, wenn die Abflachung 12 eine ebene Fläche ist. In diesem Fall ist eine sehr einfache Herstellung auf verschiedenste Art und Weise möglich. Bei der Herstellung in einem Preß- oder Zwickvorgang sind natürlich auch ganz andere Formen denkbar, z.B. auch eine Ausführung wie in Fig. 5 dargestellt. Die Abflachung 12 wird dabei von zwei oder mehr als zwei annähernd achsparallel zur Schraubenachse 9 ausgerichteten, in einem stumpfen Winkel aneinander anschließenden Teilflächen 18 gebildet.

Als sehr einfache Konstruktion hat sich herausgestellt, wenn die Abflachung 12 annähernd achsparallel oder sogar exakt achsparallel zur Schraubenachse 9 ausgerichtet ist. Es wäre aber auch denkbar, daß die Ausrichtung in einem spitzen Winkel gegeben ist, um dadurch beispielsweise ab Beginn der Abflachung 12 mit Abstand vom Ende 16 ausgehend eine in Richtung zum Schaft 4 hin kleiner werdende Querschnittsverringerung zu erzielen. Die Abflachung 12 könnte aber auch in die Gegenrichtung geneigt sein, so daß sich die Querschnittsverringerung mit zunehmendem Durchmesser des Endabschnittes vergrößert. Um eine Schneidwirkung zu vermeiden, wäre dann trotzdem vorgesehen, daß sich die Abflachung im Querschnitt gesehen auch im Bereich der größten Querschnittsverringerung über weniger als 180° Winkelbereich erstreckt.

Im Rahmen der Erfindung ist es auch möglich, daß der spanlos lochformende Endabschnitt 2 aus zwei oder mehr als zwei Teilabschnitten 19 und 20 mit unterschiedlichem Winkel zur Schraubenachse 9 gebildet ist. Bei den gezeigten Ausführungsformen ist der Endabschnitt im wesentlichen kegelförmig bzw. kegelstumpfförmig ausgeführt.

Der Fig. 2 ist relativ exakt zu entnehmen, wie sich die Konstruktion der loch- und gewindeformenden Schraube auf die schlußendliche Verschraubung positiv auswirkt. Das Loch wird ja geformt und nicht gebohrt, wobei außerdem keine die Lochwandung durch Wärmeeinwirkung aufweichende Reibung gegeben ist. Durch die besondere Gestaltung des Endabschnittes der Schraube wird die Lochbegrenzung im Bereich des Loches 6 nach unten gezogen, so daß sich eine Art Bund 8 bildet. In diesen Bund 8 schneidet dann das Gewinde 3 des Gewindeabschnittes 4 ein, wobei zusätzlich der Vorteil gegeben ist, daß der Bund 8 praktisch federnd gegen das Gewinde 3 abgestützt ist und somit ein guter und sicherer Halt der Schraube 1 gewährleistet wird.

Die erfindungsgemäße Schraube kann sowohl zum Befestigen diverser Teile auf einem entsprechenden Werkstück 7 als auch zur gegenseitigen Befestigung mehrerer Werkstücke 7 eingesetzt werden. Die Werkstücke 7 werden in der Regel Bleche mit entsprechender Dicke sein. Es hat sich herausgestellt, daß mit der erfindungsgemäßen Ausbildung einer Schraube ohne Probleme auch relativ dicke Werkstücke berücksichtigt werden können.

Eine solcherart konstruierte Schraube kann nicht nur aus einem Kohlenstoffstahl, wobei dann einzelne Abschnitte der Schraube eventuell gehärtet sind, gefertigt sein, sondern es ist durchaus möglich, die Schraube aus rostfreiem Material herzustellen, wobei die rostfreie Ausführung einschließlich des Endabschnittes 2 möglich geworden ist. Bisher ist ja immer davon ausgegangen worden, daß man mit rostfreiem Material nicht "bohren" kann. Es war daher ein Vorurteil der Fachwelt zu überwinden, um hier überhaupt an eine Möglichkeit heranzugehen, eine loch- und gewindeformende Schraube zu fertigen, welche aus einem rostfreien Material gebildet ist und das Loch und das Gewinde selbst formt. Als rostfreies Material kann rostfreier Stahl eingesetzt werden. Es ist aber auch möglich, als rostfreies Material Leichtmetalle oder Legierungen aus Leichtmetallen bzw. Legierungen mit einem Hauptanteil an Leichtmetallen, wie z.B. Messing, Kupfer, Aluminium oder dergleichen, vorzusehen.

Gerade mit der erfindungsgemäßen Ausgestaltung wäre es aber auch möglich, als rostfreies Material Kunststoff einzusetzen. Gedacht wird dabei an Schrauben aus einem entsprechend zähen Kunststoffmaterial, welche insbesondere zum Durchdringen und Eindrehen in Kunststoffplatten, in Folien oder aber auch in Leichtmetalle eingesetzt werden könnten.

Das Eindrehen und somit das Formen des Loches können noch verbessert werden, wenn zusätzlich zu den konstruktiven Maßnahmen auch noch ein erfindungsgemäßes Verfahren eingesetzt wird. Demnach ist beim spanlos lochformenden Drehen der Schraube zusätzlich zum Drehantrieb eine axiale Schlageinwirkung auf die Schraube auszuüben. Gerade bei der vorliegenden konstruktiven Gestaltung mit der Abflachung 12 oder entsprechenden Einbuchtungen oder Wölbungen wirkt sich diese zusätzliche Schlageinwirkung besonders positiv aus, da die aufzubringende Kraft durch die Querschnittsverringerung in axialer Richtung wesentlich kleiner wird und das Drehmoment für das Verdrehen der Schraube in ausreichendem Maße vorhanden ist. Es kann also der Bohrvorgang wesentlich beschleunigt werden.

In diesem Zusammenhang ist es dann natürlich auch vorteilhaft, wenn die Schlageinwirkung auf die Schraube 1 eben nur beim Lochformvorgang einwirkt, beim Drehvorgang beim Gewindeformen und beim Eindrehen der Schraube jedoch ausgeschaltet wird. Somit ist zum Formen des Loches die entsprechende Wirkung in axialer Richtung gegeben, jedoch wird gerade dann, wenn das Gewinde geformt werden soll, die Schlageinwirkung wieder ausgeschaltet, um dadurch ein möglichst engpassendes Gewinde herzustellen.

In der Zeichnung und in der Beschreibung ist davon ausgegangen worden, daß ein mit einem Gewinde 3 versehener Schaftabschnitt 4 und ein gewindefreier Schaftabschnitt 10 am Übergang zum Endabschnitt 2 vorgesehen sind. Es wäre möglich, unterhalb des Schraubenkopfes einen zusätzlichen gewindefreien Schaftabschnitt 11 vorzusehen, wie dies der Fig. 1 entnommen werden kann. Die Möglichkeit, über die ganze Länge des Schaftes ein Gewinde anzuordnen oder aber bei entsprechend längeren Schrauben mehrere mit Abstand aufeinander folgende Gewindeabschnitte vorzusehen, ist ebenfalls gegeben. Dabei sind auch Gewindeabschnitte unterschiedlichen Durchmessers möglich. Beispielsweise könnte unterhalb des Werkstückes 7 ja auch ein Holzbalken vorgesehen sein, so daß dann nach dem Durchdringen des Endabschnittes 2 und somit dem Ausformen des Loches ein darauffolgendes Holzschraubengewinde in den Untergrund eingedreht werden könnte. Die besondere Art und Größe des Gewindes ist also ohne Bedeutung. Bei solchen Schrauben kann jede Größe von Durchmessern vorgesehen werden, wobei natürlich der erforderliche Anpreßdruck und das Drehmoment zu übertragen sind.

## Patentansprüche

1. Loch- und gewindeformende Schraube mit einem zu einer Spitze oder zu einer spitzenähnlichen Form auslaufenden, spanlos lochformenden, gewindefreien Endabschnitt, einem mit einem Gewinde versehenen Schaftabschnitt und einem Angriffsabschnitt zum An- oder Einsetzen eines Werkzeuges, **dadurch gekennzeichnet**, daß der spanlos lochformende, spitzwinklig zur Schraubenachse (9) zum Ende hin sich kegelförmig oder kegelstumpfförmig verjüngende Endabschnitt (2) der Schraube (1) zumindest eine annähernd achsparallel verlaufende, eine Querschnittsverringerung über wenigstens einen Teilbereich der Länge des Endabschnittes (2) bewirkende Abflachung (12), Einbuchtung oder Wölbung aufweist, so daß der Außenumfang des verbleibenden Querschnitts sich über einen Winkelbereich von mehr als 180° erstreckt, und daß die Abflachung (12), Einbuchtung oder Wölbung mit Abstand (A) vom freien Ende (16) des Endabschnittes (2) beginnt und sich zumindest über einen Großteil der Länge (B) des restlichen Teilabschnittes (17) des sich zum Schaft (4) hin erweiternden Endabschnittes (2) erstreckt.

2. Schraube nach Anspruch 1, dadurch gekennzeichnet, daß sich die Abflachung (12), Einbuchtung oder Wölbung über den Endabschnitt (2) hinaus bis in einen zylindrischen oder prismaförmigen, vorzugsweise gewindefreien Schaftabschnitt (10) erstreckt.

3. Schraube nach Anspruch 1, dadurch gekennzeichnet, daß die Abflachung (12) eine ebene Fläche ist.

4. Schraube nach Anspruch 1, dadurch gekennzeichnet, daß die Abflachung (12) von zwei oder mehr als zwei annähernd achsparallel zur Schraubenachse (9) ausgerichteten, in einem stumpfen Winkel aneinander anschließenden Teilflächen (18) gebildet ist.

5. Schraube nach Anspruch 1, dadurch gekennzeichnet, daß die Schraube (1) aus einem Kohlenstoffstahl gefertigt ist.

6. Schraube nach Anspruch 1, dadurch gekennzeichnet, daß die Schraube (1) durchgehend aus einem rostfreien Material hergestellt ist.

7. Schraube nach Anspruch 6, dadurch gekennzeichnet, daß als rostfreies Material ein rostfreier Stahl eingesetzt ist.

8. Schraube nach Anspruch 6, dadurch gekennzeichnet, daß als rostfreies Material Leichtmetalle oder Legierungen aus Leichtmetallen bzw. Legierungen mit einem Hauptanteil an Leichtmetallen, z.B. Messing, Kupfer, Aluminium oder dergleichen, eingesetzt sind.

9. Schraube nach Anspruch 1, dadurch gekennzeichnet, daß der spanlos lochformende Endabschnitt (2) aus zwei oder mehr als zwei Teilabschnitten (19, 20) mit unterschiedlichem Winkel zur Schraubenachse (9) gebildet ist.

10. Verfahren zum Eindrehen einer loch- und gewindeformenden Schraube nach einem oder mehreren der Ansprüche 1 bis 9, dadurch gekennzeichnet, daß beim spanlos lochformenden Drehen der Schraube (1) zusätzlich zum Drehantrieb eine axiale Schlageinwirkung auf die Schraube (1) ausgeübt wird.

11. Verfahren nach Anspruch 10, dadurch gekennzeichnet, daß die Schlageinwirkung auf die Schraube (1) nur beim Lochformvorgang einwirkt und beim Drehvorgang beim Gewindeformen und beim Eindrehen der Schraube (1) in das Gewinde ausgeschaltet wird.

## Claims

1. A hole-forming and thread-forming screw with a threadless end portion which narrows to a tip or a tip-like shape and which forms a hole in a non-cutting manner, with a shank portion provided with a thread and with an engagement portion for the application or insertion of an implement, characterised in that the end portion (2) of the screw (1), which forms a hole in a non-cutting manner and which tapers towards the end conically or frustoconically at an acute angle to the screw axis (9), has at least one axially parallel extending flat (12), indentation or curvature which results in a reduction in cross-section over at least one part of the length of the end portion (2), so that the outer circumference of the remaining cross-section extends over an angular range of more than 180°, and in that the flat (12), indentation or curvature starts at a distance (A) from the free end (16) of the end portion (2) and extends at least over a majority of the length (B) of the remaining part (17) of the end portion (2) widening towards the shank (4).

2. A screw according to Claim 1, characterised in that the flat (12), indentation or curvature extends beyond the end portion (2) into a cylindrical or prismatically shaped, preferably threadless, shank portion (10).

3. A screw according to Claim 1, characterised in that the flat (12) is a plane surface.

4. A screw according to Claim 1, characterised in that the flat (12) is formed by two or more surface portions (18) aligned approximately axially parallel to the screw axis (9) and adjacent one another at an obtuse angle.

5. A screw according to Claim 1, characterised in that the screw (1) is made from carbon steel.

6. A screw according to Claim 1, characterised in that the screw (1) is made entirely of a rust-free material.

7. A screw according to Claim 6, characterised in that stainless steel is used as the rust-free material.

8. A screw according to Claim 6, characterised in that light metals or alloys of light metals or alloys with a major proportion of light metals, for example brass, copper, aluminium or the like are used as the rust-free material.

9. A screw according to Claim 1, characterised in that the end portion (2) forming a hole in a non-cutting manner comprises two or more portions (19,20) at a different angle to the screw axis (9).

10. A method of screwing in a hole-forming and thread-forming screw according to one or more of Claims 1 to 9, characterised in that when the screw (1) is being turned during the forming of a hole in a non-cutting manner an axial impact action is applied to the screw (1) in addition to the rotary drive.

11. A method according to Claim 10, characterised in that the impact action on the screw (1) acts only during the hole-forming operation and is omitted during the turning operation when a thread is being formed and when screwing the screw (1) into the thread.

## Revendications

1. Vis perforatrice et de formation d'un filetage comprenant une section terminale exempte de filetage, formant un trou sans copeau, et s'étendant en pointe ou selon une forme analogue à une pointe, comprenant une section de tige pourvue d'un filetage et une section de venue en prise sur laquelle on monte ou on insère un outil,
caractérisée en ce que
la section terminale (2) de la vis (1), qui forme un trou sans copeau sous un angle de pointe par rapport à l'axe (9) de la vis, en allant en se rétrécissant en direction de l'extrémité en forme de cône ou en forme de tronc de cône, présente au moins un méplat (12), une dentelure ou une partie bombée s'étendant de façon sensiblement parallèle à l'axe et provoquant une réduction de la section transversale sur au moins une partie de la longueur de la section terminale (2), de telle sorte que le pourtour extérieur de la section transversale résiduelle s'étend sur une zone angulaire de plus de 180°, et que le méplat (12), la dentelure ou la partie bombée commence à une distance (A) de l'extrémité libre (16) de la section terminale (2) et s'étend sur au moins une grande partie de la longueur (B) de la section partielle résiduelle (17) de la section terminale (2) qui va en s'élargissant en direction de la tige (4).

2. Vis selon la revendication 1,
caractérisée en ce que
le méplat (12), la dentelure ou la partie bombée s'étend au-delà de la section terminale (2) jusque dans une section de tige (10), cylindrique ou en forme de prisme, de préférence exempte de filetage.

3. Vis selon la revendication 1,
caractérisée en ce que
le méplat (12) a une surface plane.

4. Vis selon la revendication 1,
caractérisée en ce que
le méplat (12) se compose de deux surfaces partielles (18) ou de plus de deux surfaces, orientées approximativement de façon parallèle à l'axe (9) de la vis et se raccordant l'une à l'autre sous un angle obtus.

5. Vis selon la revendication 1,
caractérisée en ce que
la vis (1) est réalisée en un acier au carbone.

6. Vis selon la revendication 1,
caractérisée en ce que
la vis (1) est fabriquée de bout en bout en une matière inoxydable.

7. Vis selon la revendication 6,
caractérisée en ce qu'
on utilise comme matière inoxydable un acier inoxydable.

8. Vis selon la revendication 6,
caractérisée en ce qu'
on utilise, comme matière inoxydable, des métaux légers, ou des alliages de métaux légers, ou des alliages ayant une part principale de métaux légers, par exemple du laiton, du cuivre, de l'aluminium ou des métaux analogues.

9. Vis selon la revendication 1,
caractérisée en ce que
la section terminale (2) formant un trou sans copeau se compose de deux sections partielles (19, 20) ou de plus de deux sections partielles présentant des angles différents par rapport à l'axe (9) de la vis.

10. Procédé pour enfoncer en tournant une vis perforatrice et de formation d'un filetage, selon l'une ou plusieurs des revendications 1 à 9,
caractérisé en ce que
lors de la rotation de la vis (1) formant un trou sans copeau, on exerce, en plus de l'entraînement en rotation, une percussion axiale sur la vis (1).

11. Procédé selon la revendication 10,
caractérisé en ce que
la percussion sur la vis (1) n'intervient que lors du processus de formation du trou et est arrêtée lors du processus de rotation servant à former le filetage et à enfoncer en tournant la vis (1) dans le filetage.
